# EUROPEAN PATENT APPLICATION

(11) **EP 3 653 319 A1**
(43) Date of publication of application: **20.05.2020**
(21) Application number: 19205045.8
(22) Date of filing: 24.10.2019
(51) Int. Cl.: B22F 3/00, B33Y 10/00, B33Y 30/00, B23K 26/144, B23K 26/342, B23P 15/00, B29C 64/153, B22F 3/105, B29C 64/20, B29C 64/241, B22F 5/02, B22F 5/10

(54) **CENTRIFUGAL ADDITIVE MANUFACTURING APPARATUS AND METHOD**

(30) Priority: 15.11.2018 US 201816191796
(71) Applicant: General Electric Company, Schenectady, NY 12345 (US)
(72) Inventor: Corsmeier, Donald Michael, Evendale, OH Ohio 45215-1988 (US)
(74) Representative: Hafner & Kohl PartmbB

(57) **Abstract**

An additive manufacturing apparatus (10) includes: a build drum (12, 112, 212), the build drum (12, 112, 212) having a peripheral wall defining a worksurface, the build drum (12, 112, 212) being mounted for rotation about a central axis; a drive mechanism (30) operable to rotate the build drum (12, 112, 212) about the central axis, to hold a solidifiable material on the worksurface by centrifugal force; and a material deposition and solidification apparatus (14, 114, 214), including: a material depositor (34) operable to deposit the solidifiable material on the worksurface; and an apparatus operable to selectively solidify the solidifiable material.

## Description

### BACKGROUND OF THE INVENTION

This invention relates generally to additive manufacturing, and more particularly to methods for curable material handling in additive manufacturing.

Additive manufacturing is a process in which material is built up piece-by-piece, line-by-line, or layer-by-layer to form a component. Additive manufacturing is also referred to by terms such as "layered manufacturing," "reverse machining," "direct metal laser melting" (DMLM), and "3-D printing". Such terms are treated as synonyms for purposes of the present invention.

One type of additive manufacturing machine is referred to as a "powder bed" machine and includes a build chamber that encloses a mass of powder which is selectively fused by a laser to form a workpiece.

There is a desire in some applications to make large annular components. One problem with using existing additive manufacturing machines to make annular components is that they require a large, heavy powder bed, even though the majority of the powder will not be used to form a component.

### BRIEF DESCRIPTION OF THE INVENTION

At least one of these problems is addressed by an additive manufacturing method in which material is deposited and held on a peripheral wall of a rotating drum by centrifugal force.

According to one aspect of the technology described herein, an additive manufacturing apparatus includes: a build drum, the build drum having a peripheral wall defining a worksurface, the build drum being mounted for rotation about a central axis; a drive mechanism operable to rotate the build drum about the central axis, to hold a solidifiable material on the worksurface by centrifugal force; a material deposition and solidification apparatus, including: a material depositor operable to deposit the solidifiable material on the worksurface; and

an apparatus operable to selectively solidify the solidifiable material.

According to another aspect of the technology described herein, a method of making a workpiece includes: depositing a solidifiable material in a build drum having a peripheral wall defining a worksurface; rotating the build drum about a central axis, to hold the solidifiable material against the worksurface by centrifugal force; and selectively solidifying the solidifiable material in a pattern corresponding to a layer of the workpiece, while the build drum rotates.

### BRIEF DESCRIPTION OF THE DRAWINGS

The invention may be best understood by reference to the following description taken in conjunction with the accompanying drawing figures in which:
FIG. 1 is a schematic top view of an exemplary additive manufacturing apparatus, which is partially broken-away to show certain details;
FIG. 2 is a schematic, partially-sectioned left side elevation view of the apparatus of FIG. 1;
FIG. 3 is a schematic, partially-sectioned right side elevation view of the apparatus of FIG. 1;
FIG. 4 is a schematic cross-section view of an alternative build drum;
FIG. 5 is a schematic cross-sectional view of another alternative build drum;
FIG. 6 is an enlarged view of a portion of the apparatus of FIG. 1, illustrating an additive manufacturing process;
FIG. 7 is a schematic, partially-sectioned left side elevation view of the apparatus of FIG. 1, showing an alternative additive manufacturing process; and
FIG. 8 is an enlarged view of a portion of the apparatus of FIG. 1, modified with an alternative additive material deposition and solidification apparatus.
FIG. 9 is an enlarged view of a portion of the apparatus of FIG. 1, modified with an alternative additive material deposition and solidification apparatus.

### DETAILED DESCRIPTION OF THE INVENTION

The concept disclosed herein presents an additive manufacturing method and related apparatus in which solidifiable material is deposited on a rotating build drum and held in place by centrifugal force.

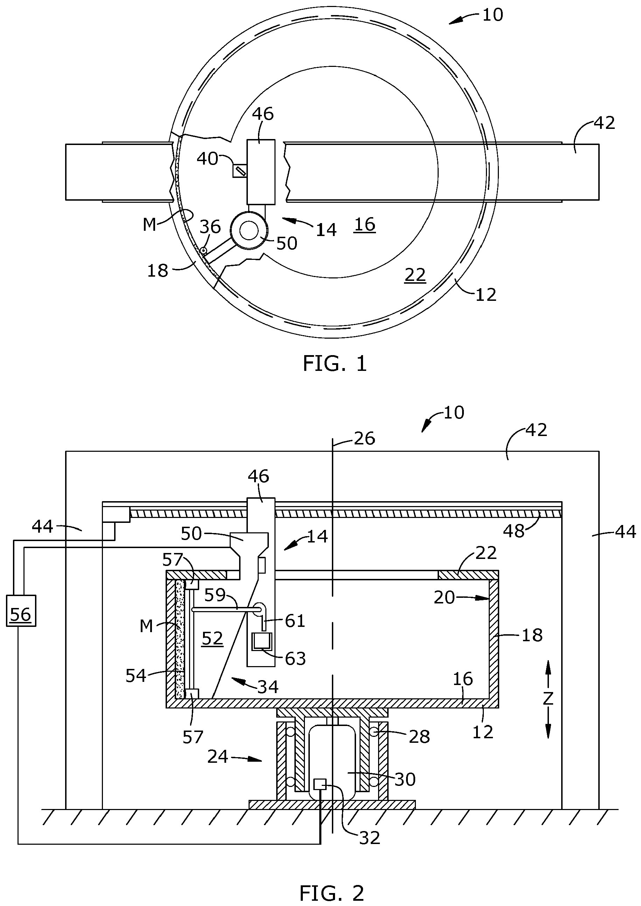

Referring to the drawings wherein identical reference numerals denote the same elements throughout the various views, FIGS. 1-3 illustrate schematically an additive manufacturing machine or apparatus 10 suitable for carrying out an additive manufacturing method. As will be explained in more detail below, it will be understood that other configurations of equipment may be used to carry out the method described herein. Basic components of the apparatus 10 include a build drum 12 and a material deposition and solidification apparatus 14.

The build drum 12 is a generally rigid structure. It includes a floor 16 at its lower end which may be planar. For purposes of convenient description, the floor 16 may be considered to be oriented parallel to an X-Y plane of the apparatus 10, and a direction perpendicular to the X-Y plane is denoted as a Z-direction (X, Y, and Z being three mutually perpendicular directions).

A peripheral wall 18 defining a worksurface 20 extends upward from the floor 16. The peripheral wall 18 is generally a body of revolution. The cross-sectional shape of the peripheral wall 18 may be varied to suit a particular component to be produced. In the example shown in FIGS. 1-3, the peripheral wall 18 is cylindrical and extends generally perpendicular to the floor 16 (i.e., parallel to the Z-axis). Optionally, the peripheral wall 18 could be made as a separate component which is removable from the floor 16. Optionally the peripheral wall 18 could be made in two or more segments. Optionally, the peripheral wall 18 could be lined with a removable sleeve (not shown) or multiple sleeves stacked or spaced apart that would provide the build surface or surfaces 20. Still another alternative would be to have discrete removable segments secured to the peripheral wall 18 at suitable locations about the perimeter from which to initiate the build .

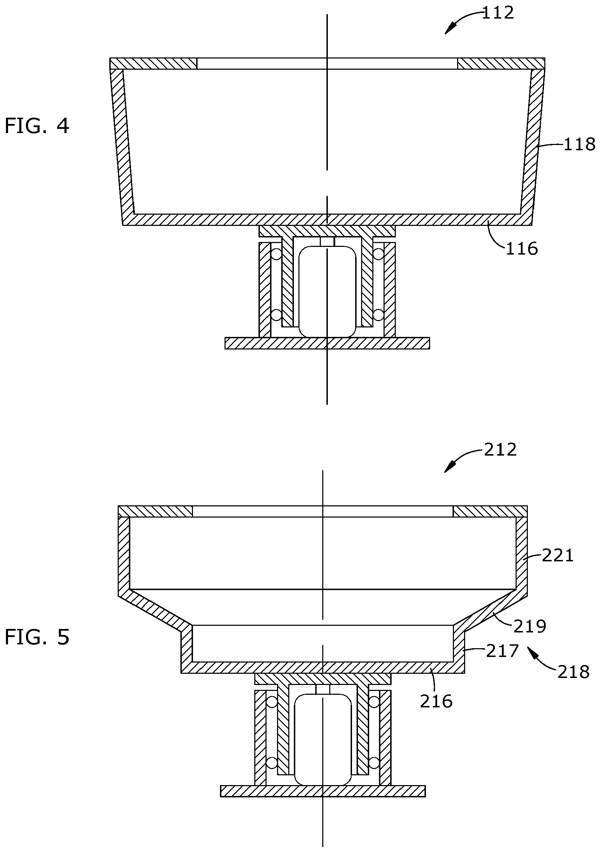

In another exemplary drum 112 shown in FIG. 4, an alternative peripheral wall 118 extends at an oblique angle to the floor 116, defining a frustoconical shape.

In another exemplary drum 212 shown in FIG. 5, the peripheral wall 218 has a first section 217 extending vertically from the floor 216 parallel to the Z-direction, a second section 219 extending radially outwards at an angle oblique to the floor 216, and a third section 221 extending parallel to the Z-direction.

Optionally, the build drum 12 may include a cover 22, which is a ringshaped element disposed at to the upper edge of the peripheral wall 18. It may be removably secured to the peripheral wall 18, for example using a mechanical joint or fasteners (not shown). The purpose of the cover 22 is to retain material in place during a build process.

The build drum 12 is supported on a base 24 such that it can rotate about central axis 26 which is parallel to the Z-direction. Support is provided by a plurality of bearings 28 between the base 24 and the build drum 12. A drive mechanism is provided in the form of a variable-speed electric motor 30. Other mounting and drive systems are possible; the mounting and drive system would be selected as appropriate for the specific application.

The build drum 12 may be provided with suitable sensors to provide feedback for monitoring or controlling its operation. For example, its rotational speed and/or orientation may be sensed during operation. As one example, the drum 12 may be provided with a rotary encoder or resolver, synchronous or asynchronous. The sensor or sensors may be integral to the drive mechanism. A representative sensor 32 is shown schematically in FIG. 2.

The build drum 12 may be used with various types of material deposition and solidification equipment.

One example of a material deposition and solidification apparatus 14, shown in FIGS. 1-3, is similar to that used in "powder bed" additive manufacturing systems. It includes a material supply 34, a recoater 36, a directed energy source 38, and a beam steering apparatus 40.

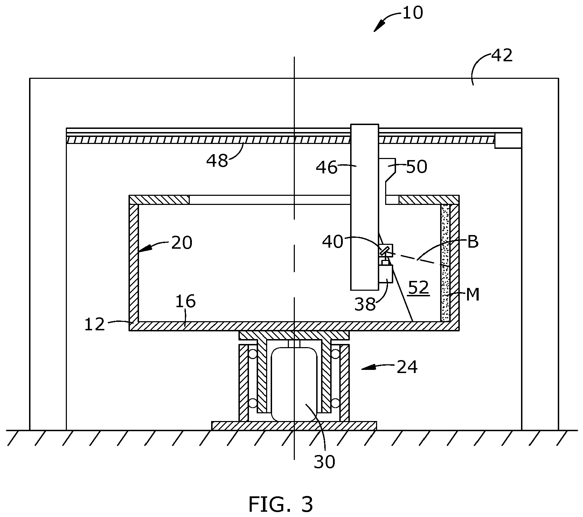

Suitable support means are provided for the powder deposition and solidification apparatus 10. In the illustrated example, a bridge 42 spans horizontally above the drum 12, supported by vertical posts 44. A column 46 is carried by the bridge 42 and extends down into the drum 12. Suitable means are provided for translating the column 46 along the bridge 42. A traversing mechanism 48 is depicted schematically in FIGS. 2 and 3, with the understanding devices such as pneumatic or hydraulic cylinders, ballscrew or linear electric actuators, and so forth, may be used for this purpose.

The material supply 34 comprises a hopper 50 mounted to the column 46. A chute 52 communicates with the hopper 50 and terminates at a material outlet 54. The material outlet 54 may have a shape closely conforming to the shape of the peripheral wall 18. The hopper 50 is loaded with a supply of solidifiable material "M". As used herein, the term "solidifiable" refers to a material which is initially flowable, regardless of its phase (i.e., solid or liquid), which solidifies (i.e. becomes a non-flowable solid) in response to the application of energy, such as radiant energy.

Optionally, the apparatus 10 may include multiple material supplies 34 (not shown). These could be arrayed vertically or circumferentially on the column 46. Alternatively, the additional material supplies could be supported by an additional column (not shown) riding on another traversing mechanism (similar to item 48) on a larger beam or additional beam (not shown).

In one example, the solidifiable material M may be a powder of a desired composition (for example, metallic, ceramic, and/or organic powder). The powder is "fusible", meaning it is capable of melting and consolidation into a mass upon via application of sufficient energy. For example, fusibility is a characteristic of many available polymeric, ceramic, metallic, and organic powders.

As an alternative example to powder, materials such as resins may be used as solidifiable materials M. The resin comprises a material which is radiant-energy curable and which is capable of adhering or binding together a filler (if used) in the cured state. As used herein, the term "radiant-energy curable" refers to any material which solidifies in response to the application of radiant energy of a particular frequency and energy level. For example, the resin may comprise a known type of photopolymer resin containing photo-initiator compounds functioning to trigger a polymerization reaction, causing the resin to change from a liquid state to a solid state. Alternatively, the resin may comprise a material which contains a solvent that may be evaporated out by the application of radiant energy. The uncured resin may be provided in solid (e.g. granular) or liquid form.

The composition of the resin may be selected as desired to suit a particular application. Mixtures of different compositions may be used. The resin may be selected to have the ability to out-gas or burn off during further processing, such as a sintering process.

The resin may incorporate a filler. The filler may be pre-mixed with resin, then loaded into the material supply 34. The filler comprises particles, which are conventionally defined as "a very small bit of matter". The filler may comprise any material which is chemically and physically compatible with the selected resin. The particles may be regular or irregular in shape, may be uniform or non-uniform in size, and may have variable aspect ratios. For example, the particles may take the form of powder, of small spheres or granules, or may be shaped like small rods or fibers.

The composition of the filler, including its chemistry and microstructure, may be selected as desired to suit a particular application. For example, the filler may be metallic, ceramic, polymeric, and/or organic. Mixtures of different compositions may be used. The filler may be fusible as defined above.

The proportion of filler to resin may be selected to suit a particular application. Generally, any amount of filler may be used so long as the combined material is capable of flowing and being leveled, and there is sufficient resin to hold together the particles of the filler in the cured state. The mixture of resin and filler may be referred to as a "slurry".

Other types of material supplies may be used; for example, instead of a gravity-feed hopper, a powered feeder might be used.

The recoater 36 is a rigid, vertically-extending structure that lies on the worksurface 20. It is connected to the chute 52 and/or the hopper 50 so that it can be positioned a precise distance from the worksurface 20, for example by moving the column 46.

Optionally, the apparatus 10 may include multiple recoaters 36 (not shown). These could be arrayed vertically or circumferentially on the column 46. Alternatively, the additional recoaters could be supported by an additional column (not shown) riding on another traversing mechanism (similar to item 48) on a larger beam or additional beam (not shown).

It is possible that surplus material could be caught between the floor 16 and the cover 22, where it could be slung onto the worksurface 20. Therefore, optionally, wipers, scrapers, or similar devices could be placed in appropriate positions, for example near the top and bottom of the material outlet 54 or the upper and lower ends of the recoater 36, in order to capture the surplus material. The surplus material M can then can be conveyed, e.g., by vacuum, conveyer, or gravity feed, back into the hopper 50 or disposed of. In the example shown in FIG. 2, scoops 57 are provided near the upper and lower ends of the chute 52 adjacent the material outlet 54. These are connected by piping 59 to a vacuum 61 which pulls the excess material M through the piping 59 and discharges it into a recovery container 63.

The directed energy source 38 may comprise any device operable to generate a beam of suitable power and other operating characteristics to melt and fuse the material M, or to cure the material M, during the build process which is described in more detail below. For example, the directed energy source 38 may be a laser. Other directed-energy sources such as electron beam guns are suitable alternatives to a laser.

The beam steering apparatus 40 may include one or more mirrors, prisms, and/or lenses and provided with suitable actuators, and arranged so that a beam "B" from the directed energy source 38 can be focused to a desired spot size and steered to a desired position in plane coincident with the worksurface 20. The beam B may be referred to herein as a "build beam".

Optionally, the apparatus 10 may include multiple directed energy sources 38 (not shown). These could be arrayed vertically or circumferentially on the column 46. Alternatively, the additional directed energy sources could be supported by an additional column (not shown) riding on another traversing mechanism (similar to item 48) on a larger beam or additional beam (not shown).

Optionally, the apparatus 10 may include multiple beam steering apparatuses 40 (not shown). These could be arrayed vertically or circumferentially on the column 46. Alternatively, the additional beam steering apparatuses could be supported by an additional column (not shown) riding on another traversing mechanism (similar to item 48) on a larger beam or additional beam (not shown).

The apparatus 10 may include a controller 56. The controller 56 in FIG. 1 is a generalized representation of the hardware and software required to control the operation of the apparatus 10, the build drum 12, the directed energy source 38, the beam steering apparatus, and the various motors and actuators described above. The controller 56 may be embodied, for example, by software running on one or more processors embodied in one or more devices such as a programmable logic controller ("PLC") or a microcomputer. Such processors may be coupled to sensors and operating components, for example, through wired or wireless connections. The same processor or processors may be used to retrieve and analyze sensor data, for statistical analysis, and for feedback control.

Optionally, the components of the apparatus 10 may be surrounded by a housing (not shown), which may be used to provide a shielding or inert gas atmosphere. Optionally, pressure within the housing could be maintained at a desired level greater than or less than atmospheric. Optionally, the housing could be temperature and/or humidity controlled. Optionally, ventilation of the housing could be controlled based on factors such as a time interval, temperature, humidity, and/or chemical species concentration.

An exemplary basic build process for a workpiece W using the apparatus described above is as follows. It will be understood that, as a precursor to producing a component and using the apparatus 10, the workpiece W is software modeled as a stack of layers. Each layer may be divided into a grid of pixels. It will be understood that individual layers need not be planar. For example, when manufacturing an annular workpiece, the individual layers may be similar to thin cylinders or other thin annular shapes. The actual workpiece W may be modeled and/or manufactured as a stack of dozens or hundreds of layers. Suitable software modeling processes are known in the art.

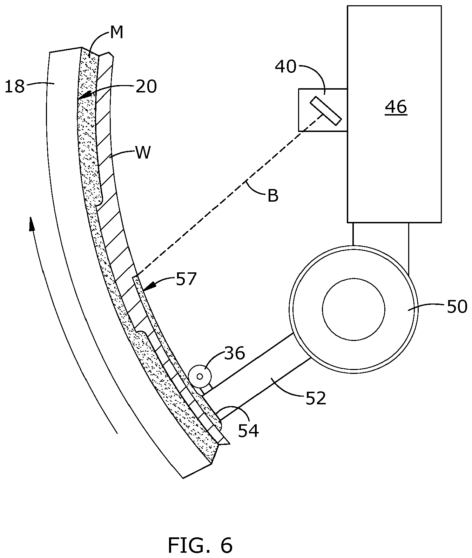

With reference to FIG. 6, initially, the drum 12 is spun at a selected rotational speed. The column 46 is moved so that the material outlet 54 is spaced away from the worksurface 20 by a selected layer increment. The layer increment affects the speed of the additive manufacturing process and the resolution of the workpiece W. As an example, the layer increment may be about 10 to 50 micrometers (0.0003 to 0.002 in.). Solidifiable material M is then deposited over the worksurface 20. As the drum 12 rotates, centrifugal force tends to drive the material M against the worksurface 20. As the rotating drum 12 with material M passes by the recoater 36, the recoater 36 spreads the material M across the worksurface 20 to a uniform thickness. The leveled material M may be referred to as a "build layer" and the exposed surface thereof may be referred to as a "build surface" 57.

During operation, the rotational speed of the drum 12 is controlled to maintain sufficient centrifugal force to hold the material M against the worksurface 20, or against the underlying material for subsequent layers. The rotational speed of the drum 12 may be capped in order to limit the forces on the drum and the material M to acceptable values. The speed may vary as the process proceeds. For example, the rotational speed may be varied to give a constant surface speed as material is added and the radius of the exposed build surface 57 decreases. The exact speed required may be computed given knowledge of the allowable forces, the dimensions of the drum 12, and the density of the material M.

Where a fusible material is used, the directed energy source 38 is used to melt a portion of the workpiece W being built. The directed energy source 38 emits a beam "B" and the beam steering apparatus 40 is used to steer a focal spot of the build beam B over the exposed material build surface 57 in an appropriate pattern. This may be referred to as "selective" solidification, as opposed to nonselective solidification, where the entire build surface 57 would be subjected to radiant energy. A small portion of exposed layer of the material M surrounding the focal spot, referred to herein as a "weld pool" is heated by the build beam B to a temperature allowing it to sinter or melt, flow, and consolidate. As an example, the weld pool may be on the order of 100 micrometers (0.004 in.) wide. This step may be referred to as fusing the material M.

Where a curable material is used instead of a fusible material, a small portion of exposed layer of the material M surrounding the focal spot solidifies in response to exposure to the build beam B. This step may be referred to as "curing" the material M.

It will be understood that, because the drum 12 is rotating, steering of the weld pool or focal spot may be accomplished by combination of beam steering apparatus 40, timing of pulses of the directed energy source 38, and/or movement of the drum 12. The material solidifying operation may be synchronous or asynchronous with the rotation of the drum 12. For example, if it is desired to create a complete annular feature, the beam B may be activated continuously while the drum 12 rotates, thus solidifying a ring of material M. The beam B may be steered in the Z direction to form the workpiece W in the vertical aspect. As another example, if it is desired to create an axial feature such as a strut or flange, this may be accomplished by activating the build beam B momentarily as the drum 12 rotates.

The material outlet 54 is moved radially inward by the layer increment, and another layer of material M is applied in a similar thickness. The directed energy source 38 again emits a build beam B and the beam steering apparatus 40 is used to steer the focal spot of the build beam B over the exposed material build surface in an appropriate pattern. The exposed layer of the material is fused and/or cured so that it can sinter or melt, flow, or otherwise consolidate both within the top layer and with the lower, previously-solidified layer.

This cycle of moving the material outlet 54, applying material M, and then directed energy solidifying the material M is repeated until the entire workpiece W is complete.

The process may be continuous or partially continuous. Stated another way, the workpiece W may be built up in a single continuous spiral layer rather than discrete layers.

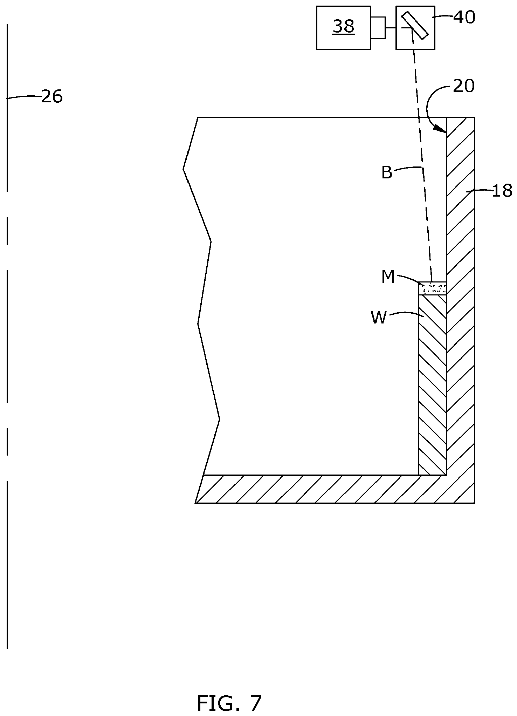

The material M may be fused from any direction. For example, rather than projecting the build beam B in a generally radial direction and fusing a circumferential layer parallel to the peripheral wall 18, the build beam B may be projected in a generally axial direction, building up a layer in a generally vertical direction. An example of this is shown in FIG. 7.

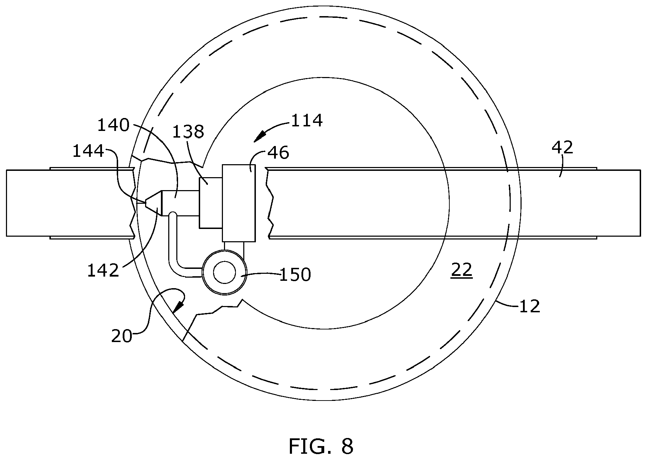

As noted above, the centrifugal drum concept may be used with more than one type of material deposition and solidification apparatus. FIG. 8 illustrates an alternative type of material deposition and solidification apparatus 114. This is similar to that used in conventional directed energy deposition ("DED") additive manufacturing systems. It includes a radiant energy source 138 such as a laser or electron beam generator, a beam delivery conduit 140 including internal laser focusing optics, a material feed nozzle 142 coaxial with the beam delivery conduit 140, and a hopper 150 configured to store and meter material to the feed nozzle 142. The feed nozzle 142 is structured so that material exits an end opening 144 at the tip of the feed nozzle 142 in a uniform stream concentrically surrounding the laser beam also exiting end opening 144 of feed nozzle 142. The energy from the laser beam will cause the material M to solidify.

Yet another type of material solidification process is a "binder jet" process. Unlike laser melting and laser sintering additive manufacturing techniques, which heat the material to consolidate and build layers of the material to form a printed part (e.g., metal or ceramic part), binder jetting uses a chemical binder to bond particles of the material into layers that form a green body of the printed part. As defined herein, the green body of the printed part is intended to denote a printed part that has not undergone heat treatment to remove the chemical binder. In binder jet printing, the chemical binder is successively deposited into layers of powder to print the part. For example, the chemical binder (e.g., a polymeric adhesive) may be selectively deposited onto a powder in a pattern representative of a layer of the part being printed. Each printed layer may be cured (e.g., via heat, light, moisture, solvent evaporation, etc.) after printing to bond the particles of each layer together to form the green body part. After the green body part is fully formed, the chemical binder is removed during post-printing processes (e.g., debinding and sintering) to form a consolidated part.

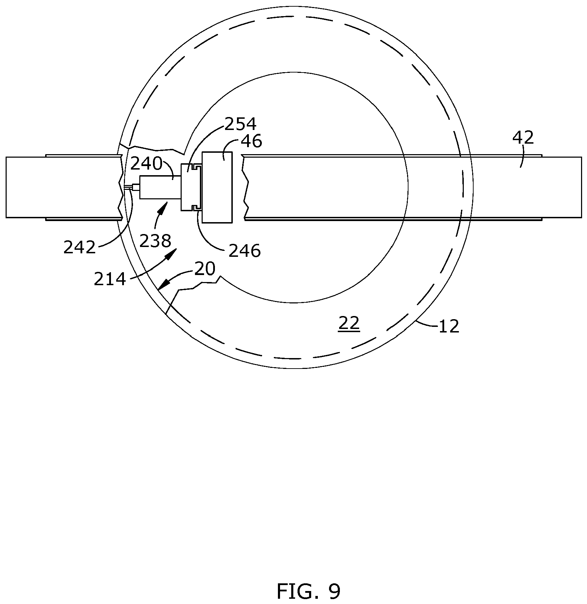

FIG. 9 is a simplified diagram of a alternative type of material deposition and solidification apparatus 214 incorporating a binder jet apparatus 238 that may be used to carry out a binder jet process by selectively depositing a binder onto the material M. (The same type of material supply 34 described above may be used in conjunction with the binder jet apparatus 238). Binder jet devices are generally known in the art. In the illustrated embodiment, the binder jet apparatus 238 includes a printer head 240 including a nozzle array 242. The printer head 240 communicates with a fluid binder reservoir 254. The entire apparatus 238 is mounted to the column 46 so that it can move in the Z direction, for example by being driven along guide rails 246 by an appropriate actuator (not shown).

The build process using the material deposition and solidification apparatus 10 is similar to the process described above, the primary difference being that the material M is deposited from the feed nozzle 242 and immediately solidified, as opposed to being laid down in a layer first.

The method and apparatus described herein has several advantages over the prior art. In particular, it eliminates the bulk, cost, and material waste of conventional powder bed methods.

The foregoing has described a method and apparatus for additive manufacturing using a centrifugal drum. All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

Various aspects and embodiments of the invention are defined by the following clauses:
1. An additive manufacturing apparatus, comprising:
   a build drum having a peripheral wall defining a worksurface, the build drum being mounted for rotation about a central axis;
   a drive mechanism operable to rotate the build drum about the central axis, so as to hold a solidifiable material on the worksurface by centrifugal force; and
   a material deposition and solidification apparatus, including:
      a material depositor operable to deposit the solidifiable material on the worksurface; and
      an apparatus operable to selectively solidify the solidifiable material.
2. The apparatus of clause 1 wherein the apparatus operable to selectively solidify the solidifiable material includes a radiant energy source positioned adjacent to the build drum, and operable to generate and project radiant energy on the solidifiable material.
3. The apparatus of clause 1 wherein the apparatus operable to selectively solidify the solidifiable material includes a binder jet printer head.
4. The additive manufacturing apparatus of clause 1, wherein the drive mechanism is operable to rotate the build drum at a variable speed.
5. The additive manufacturing apparatus of clause 1, further comprising:
   a sensor operable to generate a signal indicative of at least one of: a rotational speed of the build drum and an angular orientation of the build drum relative to the material deposition and solidification apparatus; and
   a controller operable to control the rotational speed of the drive mechanism in response to the signal from the sensor.
6. The additive manufacturing apparatus of clause 1, wherein the build drum includes a floor, and the peripheral wall extends from the floor.
7. The additive manufacturing apparatus of clause 6, wherein at least a portion of the peripheral wall extends at an oblique angle to the floor.
8. The additive manufacturing apparatus of clause 1, wherein the material deposition and solidification apparatus is supported by a translating column which extends downward into the build drum from a bridge which spans above the build drum.
9. The apparatus of clause 1 wherein the material deposition and solidification apparatus includes:
   a material depositor operable to deposit the solidifiable material on the worksurface;
   a radiant energy source operable to generate a beam of radiant energy; and
   a beam steering apparatus operable to direct the beam from the radiant energy source on the solidifiable material.
10. The apparatus of clause 9 wherein the material depositor includes a hopper communicating with a chute which terminates at a material opening.
11. The apparatus of clause 9 wherein the material depositor includes a recoater operable to spread material over the worksurface.
12. The apparatus of clause 1 wherein the material deposition and solidification apparatus includes:
   a radiant energy source;
   a beam delivery conduit operable to pass a beam from the radiant energy source therethrough;
   and a material feed nozzle disposed at a distal end of the beam delivery conduit and positioned coaxial a with the beam delivery conduit.
13. A method of making a workpiece, comprising:
   depositing a solidifiable material in a build drum having a peripheral wall defining a worksurface;
   rotating the build drum about a central axis, to hold the solidifiable material against the worksurface by centrifugal force;
   selectively solidifying the solidifiable material in a pattern corresponding to a cross-sectional layer of the workpiece, while the build drum rotates.
14. The method of clause 13 wherein the step of selectively solidifying includes directing a build beam from a directed energy source to selectively solidify the solidifiable material in a pattern corresponding to a cross-sectional layer of the workpiece, while the build drum rotates.
15. The method of clause 13 wherein the step of selectively solidifying includes selectively applying a binder from a binder jet apparatus.
16. The method of clause 13 further comprising repeating in a cycle the steps of depositing and solidifying to build up the workpiece in a layer-by layer fashion.
17. The method of clause 13 further comprising rotating the build drum at a variable rotational speed so as to maintain a constant surface speed while solidifying the solidifiable material.
18. The method of clause 13, wherein the build beam is operated synchronously relative to the rotation of the build drum.
19. The method of clause 13, further comprising:
   using a sensor to generate a signal indicative of at least one of: a rotational speed of the build drum and an angular orientation of the build drum relative to the material deposition and solidification apparatus; and
   controlling the rotational speed of the drive mechanism in response to the signal from the sensor.
20. The method of clause 13 wherein the solidifiable material is deposited from a material deposition and solidification apparatus which includes:
   a radiant energy source;
   a beam delivery conduit operable to pass a beam from the radiant energy source therethrough;
   and a material feed nozzle disposed at a distal end of the beam delivery conduit and positioned coaxial with the beam delivery conduit.

## Claims

1. An additive manufacturing apparatus (10), comprising:
a build drum (12, 112, 212), the build drum (12, 112, 212) having a peripheral wall defining a worksurface, the build drum (12, 112, 212) being mounted for rotation about a central axis;
a drive mechanism (30) operable to rotate the build drum (12, 112, 212) about the central axis, to hold a solidifiable material on the worksurface by centrifugal force; and
a material deposition and solidification apparatus (14, 114, 214), including:
a material depositor (34) operable to deposit the solidifiable material on the worksurface; and
an apparatus (38, 40, 138, 140, 238, 240) operable to selectively solidify the solidifiable material.

2. The apparatus (10) of claim 1 wherein the apparatus (38, 40, 138, 140, 238, 240) operable to selectively solidify the solidifiable material includes a radiant energy source (38) positioned adjacent to the build drum (12, 112, 212), and operable to generate and project radiant energy on the solidifiable material.

3. The apparatus (10) of claim 1 wherein the apparatus (38, 40, 138, 140, 238, 240) operable to selectively solidify the solidifiable material includes a binder jet printer head (240).

4. The additive manufacturing apparatus (10) of claim 1, further comprising:
a sensor (32) operable to generate a signal indicative of at least one of: a rotational speed of the build drum (12, 112, 212) and an angular orientation of the build drum (12, 112, 212) relative to the material deposition and solidification apparatus (14, 114, 214); and
a controller (56) operable to control the rotational speed of the drive mechanism (30) in response to the signal from the sensor (32).

5. The additive manufacturing apparatus (10) of claim 1, wherein the material deposition and solidification apparatus (14, 114, 214) is supported by a translating column (46) which extends downward into the build drum (12, 112, 212) from a bridge (42) which spans above the build drum (12, 112, 212).

6. The apparatus (10) of claim 1 wherein the material deposition and solidification apparatus (14, 114, 214) includes:
a material depositor (34) operable to deposit the solidifiable material on the worksurface;
a radiant energy source (38) operable to generate a beam of radiant energy; and
a beam steering apparatus (40) operable to direct the beam from the radiant energy source (38) on the solidifiable material.

7. The apparatus (10) of claim 1 wherein the material deposition and solidification apparatus (14, 114, 214) includes:
a radiant energy source (38);
a beam delivery conduit (140) operable to pass a beam from the radiant energy source (38) therethrough;
and a material feed nozzle disposed at a distal end of the beam delivery conduit (140) and positioned coaxial a with the beam delivery conduit (140).

8. A method of making a workpiece, comprising:
depositing a solidifiable material in a build drum (12, 112, 212) having a peripheral wall defining a worksurface;
rotating the build drum about a central axis, to hold the solidifiable material against the worksurface by centrifugal force;
selectively solidifying the solidifiable material in a pattern corresponding to a cross-sectional layer of the workpiece, while the drum (12, 112, 212) rotates.

9. The method of claim 8 wherein the step of selectively solidifying includes directing a build beam from a directed energy source to selectively solidify the solidifiable material in a pattern corresponding to a cross-sectional layer of the workpiece, while the drum (12, 112, 212) rotates.

10. The method of claim 8 wherein the step of selectively solidifying includes selectively applying a binder from a binder jet apparatus.

11. The method of claim 8 further comprising repeating in a cycle the steps of depositing and solidifying to build up the workpiece in a layer-by layer fashion.

12. The method of claim 8 further comprising rotating the build drum (12, 112, 212) at a variable rotational speed so as to maintain a constant surface speed while solidifying the solidifiable material.

13. The method of claim 8, wherein the build beam is operated synchronously relative to the rotation of the build drum (12, 112, 212).

14. The method of claim 8, further comprising:
using a sensor (32) to generate a signal indicative of at least one of: a rotational speed of the build drum (12, 112, 212) and an angular orientation of the build drum (12, 112, 212) relative to the material deposition and solidification apparatus (14, 114, 214); and
controlling the rotational speed of the drive mechanism (30) in response to the signal from the sensor (32).

15. The method of claim 8 wherein the solidifiable material is deposited from a material deposition and solidification apparatus (14, 114, 214) which includes:
a radiant energy source (38);
a beam delivery conduit (140) operable to pass a beam from the radiant energy source (38) therethrough;
and a material feed nozzle disposed at a distal end of the beam delivery conduit (140) and positioned coaxial with the beam delivery conduit (140).
